# EUROPÄISCHE PATENTSCHRIFT

(11) **EP 3 696 620 B1**
(45) Veröffentlichungstag und Bekanntmachung des Hinweises auf die Patenterteilung: **06.11.2024**
(21) Anmeldenummer: 20156063.8
(22) Anmeldetag: 07.02.2020
(51) Int. Cl.: G05B 13/02, G05D 7/06, E03B 7/04, E03C 1/00

(54) **SANITÄRANLAGENMANAGEMENTVERFAHREN**
SANITARY FACILITY MANAGEMENT METHOD
PROCÉDÉ DE GESTION DES INSTALLATIONS SANITAIRES

(30) Priorität: 15.02.2019 DE 102019103865
(43) Veröffentlichungstag der Anmeldung: 19.08.2020
(73) Patentinhaber: micas AG, 09376 Oelsnitz/Erzgebirge (DE); Caroma Industries Limited, Queensland, 4006 (AU)
(72) Erfinder: Ebert, Mark, 09376 Oelsnitz (DE); Fritzsche, Michael, 09221 Neukirchen/Erzgebirge (DE); Cummings, Steve, NSW 2103 East Mona Vale (AU)
(74) Vertreter: Steiniger, Carmen

(56) Entgegenhaltungen:
- WO-A1-2016/040989
- US-A1- 2017 030 528
- US-A1- 2017 052 536
- US-A1- 2018 143 047

## Beschreibung

Die vorliegende Erfindung betrifft ein Sanitäranlagenmanagementverfahren, bei dem bei einer Sanitäranlage mit wenigstens einer Sanitärinstallation, der Wasser zugeführt wird und/oder durch die Wasser fließt, und an der in einem Verfahrensdurchlauf wenigstens ein Betriebswert der wenigstens einen Sanitärinstallation erfasst wird, mit wenigstens einem mit der wenigstens einen Sanitärinstallation verbundenen Datensender einer Sanitäranlagensteuereinrichtung der wenigstens eine Betriebswert an ein Datenverarbeitungs- und Signalausgabesystem übertragen wird, das Datenverarbeitungs- und Signalausgabesystem den wenigstens einen Betriebswert verarbeitet, davon abhängig wenigstens ein Signal erzeugt und das wenigstens eine Signal an wenigstens einen Signalempfänger der Sanitäranlagensteuereinrichtung übermittelt.

Ein Sanitäranlagenmanagementverfahren dieser Gattung ist aus der Druckschrift WO 2016/040989 A1 bekannt. Dabei werden einem Betriebsparameter zugehörige Betriebswerte beispielsweise von Wasserverbrauchsinstallationen eines Bades, wie einer Toilette, einem Urinal, einer Waschtischarmatur und einer Badewanne, erfasst. Die dem Betriebsparameter zugehörigen Betriebswerte werden dann von einer elektronischen Steuervorrichtung der Wasserverbrauchsinstallation an eine Datenverarbeitungseinheit, wie beispielsweise einen Computer, übermittelt. In der Datenverarbeitungseinheit sind Betriebsparameter gespeichert, welche mit den übermittelten Betriebswerten verglichen werden, um bestimmen zu können, ob die jeweilige Wasserverbrauchsinstallation korrekt funktioniert. Basierend auf den übermittelten Betriebswerten errechnet daraufhin die Datenverarbeitungseinheit Steuerdaten und sendet diese an die elektronische Steuervorrichtung der Wasserverbrauchsinstallation. Basierend auf diesen Steuerdaten wird der jeweilige Betriebsparameter der Wasserverbrauchsinstallation dann von der elektronischen Steuervorrichtung geändert oder nicht.

Das bekannte Verfahren dient in erster Linie dazu, den Wasserverbrauch von Sanitäranlagen zu verringern. Für die Entscheidungsfindung, was im Einzelfall zu tun ist und was nicht, bedarf es jedoch dabei mindestens eines Menschen, der Statistiken auswertet und beispielsweise entscheidet, wie in Zeitbereichen hoher Frequentierung einer Sanitäranlage deren Wasserverbrauch reduziert werden soll, wann ein Reinigungsmodus aktiviert werden soll oder ein Service-Einsatz ausgelöst werden soll. Dies ist gerade bei größeren Sanitäranlagen mit einem großen, kaum realisierbaren Aufwand verbunden, sodass die Ressourcen, die grundsätzlich in einer Sanitäranlage beispielsweise hinsichtlich Wassereinsparung vorhanden sind, bei dem bisherigen System und dem entsprechenden Verfahren nicht genutzt werden können.

Aus der Druckschrift US 2017/0030528 A1 ist ein_Verfahren zum Erfassen von Lecks in einem Set von Durchflussmesseinheiten, die an einem Set von wasserverbrauchenden Einheiten angebracht sind, bekannt. In jeder wasserverbrauchenden Einheit des Systems ist dabei eine speziell konfigurierte Steuerung mit einem Durchflussmesser und einem automatischen Absperrventil vorgesehen. Lecksensoren/Wassersensoren sind in wasserleckgefährdeten Bereichen des Systems angeordnet, wobei eine zentrale Steuerung des Systems sowohl mit den Durchflussmesseinheiten als auch mit den Lecksensoren/Wassersensoren kommuniziert. Bei den vorgenommenen Messungen werden Veränderungen im Vergleich zu früher festgelegten Basisparametern erfasst. Wenn anormale Messwerte ermittelt werden, wird eine Warnung ausgegeben oder der Wasserzufluss abgestellt.

Die Druckschrift US 2017/0030528 A1 offenbart ein System und ein Verfahren zum Erfassen von Lecks in einem Set von Durchflussmesseinheiten, die an einem Set von wasserverbrauchenden Einheiten vorgesehen sind. Jede Durchflussmesseinheit weist einen Durchflussmesser, eine lokale Steuerung, mehrere Sensoren und ein Steuerventil auf. Das System weist ferner Lecksensoren/Wassersensoren auf, die in wasserleckgefährdeten Bereichen angeordnet sind, wobei eine zentrale Steuerung des Systems sowohl mit den Durchflussmesseinheiten als auch mit den Lecksensoren/Wassersensoren kommuniziert. Mit der zentralen Steuerung werden Veränderungen im Vergleich zu früher festgelegten Basisparametern festgestellt. Das System basiert auf Strömungsdaten und einer Strömungsanalysesoftware, die selbstlernend ausgebildet ist.

Die Druckschrift WO 2016/040989 A1 offenbart ein Sanitäranlagenmanagementsystem sowie ein Sanitäranlagenmanagementverfahren, bei welchen einem Betriebsparameter zugehörige Betriebswerte von Wassersteuervorrichtungen von Wasserverbrauchsinstallationen eines Bades erfasst werden. Die dem Betriebsparameter zugehörigen Betriebswerte werden von einer sogenannten eingebetteten elektronischen Vorrichtung zu Steuerdaten verarbeitet, welche an eine übergeordnete elektronische Steuerung übermittelt werden. Basierend auf den übermittelten Steuerdaten wird durch die übergeordnete elektronische Steuerung der Betriebsparameter der Wasserverbrauchsinstallation von der elektronischen Steuervorrichtung gesteuert.

Die Druckschrift US 2018/143047 A1 beinhaltet ein Erfassungssystem für eine Wasserinfrastruktur, welches Wasserströmungen erfasst und abnormale Wasserverbräuche erkennt. Das System weist einen Prozessor auf, welcher von wenigstens einem mit der Wasserinfrastruktur gekoppelten Sensor aktuelle Wasserverbrauchswerte erhält. Anhand dieser Werte erstellt das System ein aktuelles Wassernutzungsprofil. Das System weist eine Datenbank auf, welche eine Vielzahl von regulären Wassernutzungsprofilen speichert. Anhand eines Vergleiches zwischen dem aktuellen Wassernutzungsprofil und einigen der gespeicherten regulären Wassernutzungsprofile kann ein abnormaler Wasserverbrauch identifiziert werden. Die Werte für die regulären Wassernutzungsprofile basieren auf vordefinierten oder gelernten Werten.

Ein weiteres Managementsystem zur Fehleranalyse und Optimierung ist in der Druckschrift US 2017/052536 A1 beschrieben. Das Managementsystem überwacht unter anderem die Energieeffizienz von Gebäuden. Hierzu werden kontinuierlich Leistungsdaten erfasst, welche mit Vergangenheitswerten verglichen werden. Aus diesem Vergleich werden Regeln abgeleitet, um außergewöhnliche Ereignisse ableiten zu können. Die erforderlichen Werte werden beispielsweise durch Messung ermittelt, wobei das System selbstlernend ist.

Es ist daher die Aufgabe der vorliegenden Erfindung, das gattungsgemäße Verfahren so weiterzubilden, dass die Effizienz hinsichtlich des Wasserverbrauches einer Sanitäranlage bei gleichbleibendem oder sogar geringerem Aufwand noch weiter gesteigert werden kann.

Die Aufgabe wird durch ein Sanitäranlagenmanagementverfahren gemäß Anspruch 1 gelöst.

Das maschinelle Lernen des Datenverarbeitungs- und Signalausgabesystems erfolgt überwacht (supervised learning), wobei das Datenverarbeitungs- und Signalausgabesystem mit vordefinierten Daten trainiert wird, und/oder unüberwacht (unsupervised learning), wobei das Datenverarbeitungs- und Signalausgabesystem im Betrieb fortwährend auf Basis der übermittelten Daten lernt, und/oder bestärkt (reinforcement learning), wobei das Datenverarbeitungs- und Signalausgabesystem eine Rückkopplung oder Rückmeldung von wenigstens einem anderen Bestandteil und/oder wenigstens einem Nutzer des Sanitäranlagenmanagementsystems erhält, ob das Lernen zu einem Erfolg geführt hat.

In vorteilhaften Ausgestaltungen des erfindungsgemäßen Verfahrens arbeitet dieses auf Basis eines künstlichen neuronalen Netzes. Bei dem erfindungsgemäßen Verfahren kann alternativ oder zusätzlich dazu ein Expertensystem, also ein Computerprogramm, welches auf Grundlage einer Wissensbasis Entscheidungen trifft, angewendet werden.

Bei dem erfindungsgemäßen Verfahren werden in einem Verfahrensdurchlauf die übermittelten Daten und das wenigstens eine davon abhängig erzeugte Signal der jeweils dem aktuellen vorangegangenen Verfahrensdurchläufe analysiert, daraus wenigstens eine Regel und/oder einen Algorithmus für eine Optimierung des wenigstens einen Betriebswertes der wenigstens einen Sanitärinstallation abgeleitet, abhängig von den aktuell übermittelten Daten und der wenigstens einen Regel und/oder dem wenigstens einen Algorithmus das wenigstens eine Signal als aktuelles Signal erzeugt und dieses aktuelle Signal an den Signalempfänger übermittelt. Diese Vorgehensweise erfolgt vorzugsweise in jedem Verfahrensdurchlauf. Sie kann aber auch zeit-, ereignis- und/oder nutzergesteuert erfolgen.

Dabei wird in der vorliegenden Erfindung unter einem Verfahrensdurchlauf ein Zyklus verstanden, in dem von der wenigstens einen Sanitärinstallation, gegebenenfalls mit wenigstens einem Basissensor, Daten erfasst werden, wenn vorhanden Daten weiterer Sensoren erfasst werden und wenn erforderlich wenigstens ein Signal, z. B. zur Änderung von Einstellungen an der Sanitäranlage, erzeugt wird. Beispielsweise können bei dem erfindungsgemäßen Sanitäranlagenmanagementverfahren die Daten der Sensoren nur in bestimmten Zeitabständen, wie beispielsweise in Zeitabständen von 15 Minuten, ausgelesen bzw. erfasst werden. Eine Erzeugung des wenigstens einen Signals und damit eine Änderung der Einstellungen an der Sanitäranlage kann jedoch weitaus seltener erfolgen, nämlich nur bei Bedarf.

Alternativ oder zusätzlich dazu kann das Datenverarbeitungs- und Signalausgabesystem das wenigstens eine Signal auf Basis wenigstens eines mit Methoden der künstlichen Intelligenz trainierten Regelwerkes und/oder Klassifikators erzeugen. Das Regelwerk und/oder der Klassifikator kann/können außerhalb des Datenverarbeitungs- und Signalausgabesystems, beispielsweise unter Verwendung von echten Daten aber unter Laborbedingungen, trainiert werden. Das Regelwerk und/oder der Klassifikator kann/können fest in das Datenverarbeitungs- und Signalausgabesystem integriert werden, ohne dass eine fortlaufende Optimierung des Regelwerks und/oder Klassifikators stattfindet. Ein solcher Klassifikator kann beispielsweise ein neuronales Netzwerk sein.

Bei dem erfindungsgemäßen Sanitäranlagenmanagementverfahren lernt das Datenverarbeitungs- und Signalausgabesystem maschinell. Es kann dadurch schneller und zuverlässiger analysieren und Entscheidungen finden, als dies durch einen Menschen möglich ist.

Vorzugsweise erlernt das Datenverarbeitungs- und Signalausgabesystem maschinell aus von dem Datensender übermittelten Daten und an den Signalempfänger übermittelten Signalen sowie aus der daraus abgeleiteten wenigstens einen Regel und/oder dem wenigstens einen Algorithmus wenigstens ein Nutzungsszenario für die wenigstens eine Sanitärinstallation und optimiert in Abhängigkeit von dem wenigstens einen Nutzungsszenario das jeweilige aktuelle Signal.

Gemäß dieser Option der Erfindung lernt das Datenverarbeitungs- und Signalausgabesystem typische Nutzungsszenarien, um auf dieser Basis Einstellungen an der wenigstens einen Sanitärinstallation zu optimieren, Abweichungen in deren Funktion zu erkennen usw.

Dabei ist es von Vorteil, wenn das Datenverarbeitungs- und Signalausgabesystem maschinell das wenigstens eine Nutzungsszenario unter Berücksichtigung jedes Verfahrensdurchlaufes anpasst.

Durch diese fortlaufende Optimierung kann einmal durch das Sanitäranlagenmanagementsystem erlerntes Verhalten stetig anhand von dessen realer Nutzung optimiert werden. Es hat sich auch als vorteilhaft erwiesen, wenn das Datenverarbeitungs- und Signalausgabesystem maschinell anhand des wenigstens einen Nutzungsszenarios zukünftig von dem Datensender zu erwartende Betriebswerte vorausberechnet.

Gemäß dieser Option der Erfindung können in dem erfindungsgemäßen Sanitäranlagenmanagementverfahren Prognosen erstellt werden, welche ein vorausschauendes Auslösen von Aktionen an und/oder Steuern der wenigstens einen Sanitärinstallation ermöglichen. Anhand erlernter Nutzungsszenarien können auch verschiedene Verhaltensweisen und/oder Nutzungsprofile von Nutzern der wenigstens einen Sanitärinstallation vorhergesehen werden.

Ferner ist es in einer Ausführungsform des erfindungsgemäßen Sanitäranlagenmanagementverfahrens vorgesehen, dass das Datenverarbeitungs- und Signalausgabesystem maschinell die von dem Datensender übermittelten Daten im Vergleich mit der wenigstens einen Regel und/oder dem wenigstens einen Algorithmus und/oder dem wenigstens einen Nutzungsszenario in korrekte und fehleranzeigende Daten eingruppiert. Hierbei kann das erfindungsgemäße Sanitäranlagenmanagementverfahren neuronale Netze nutzen. Damit ist es für das Sanitäranlagenmanagementsystem möglich, typische korrekte und fehlerhafte Betriebszustände der wenigstens einen Sanitärinstallation einzulernen und/oder an dieser Fehler zu erkennen.

Im Falle fehleranzeigender Daten löst das Datenverarbeitungs- und Signalausgabesystem (a) eine Aktion an der Sanitärinstallation oder deren Wasserversorgung aus und/oder gibt (b) eine Assistenzmeldung und/oder eine Benachrichtigung aus.

Vorteilhaft ist es auch, wenn in dem erfindungsgemäßen Sanitäranlagenmanagementverfahren eine Modellbildung vorgenommen wird. Hierbei bildet das Sanitäranlagenmanagementsystem ein Modell der Sanitäranlage, welches das Verhalten aller Komponenten und Einflüsse der Sanitäranlage sowie deren Wechselwirkungen beinhaltet. Solche Wechselwirkungen können beispielsweise Wechselwirkungen zwischen der Sanitäranlage und der Wasserversorgung, zwischen der Sanitäranlage und weiteren Wasserverbrauchern, zwischen der Sanitäranlage und sonstiger Gebäudetechnik oder zwischen der Sanitäranlage und Nutzern der Sanitäranlage oder Wechselwirkungen mit Daten aus weiteren Datenquellen sein. Das erstellte Modell dient der Erkennung typischer Szenarien und/oder der Erstellung von Prognosen. Beispielsweise können anhand eines von dem Datenverarbeitungs- und Signalausgabesystem erlernten Nutzungsszenarios und der Feststellung einer hohen Nutzerfrequenz aus den an das Datenverarbeitungs- und Signalausgabesystem übermittelten Daten, z. B. in einer Pause einer Veranstaltung, Einstellungen an der Sanitäranlage während des entsprechenden Zeitraums, also hier der Pause, angepasst werden.

Vorzugsweise verläuft das erfindungsgemäße Sanitäranlagenmanagementverfahren so, dass die Sanitäranlagensteuerung nach Erhalt des jeweiligen wenigstens einen aktuellen Signals von dem Signalempfänger wenigstens einen Betriebsparameter der wenigstens einen Sanitärinstallation aktiv ändert.

Das Sanitäranlagenmanagementsystem kann also in dieser Ausgestaltung selbstständig Entscheidungen treffen. Entsprechend liegt bei dieser Ausführungsform ein selbstständiger Betrieb des erfindungsgemäßen Sanitäranlagenmanagementverfahrens vor. Aktionen und/oder Optimierungen werden hier von dem Sanitäranlagenmanagementsystem selbstständig durchgeführt.

In einer alternativen oder ergänzenden Ausgestaltung des erfindungsgemäßen Sanitäranlagenmanagementverfahrens gibt die Sanitäranlagensteuerung nach Erhalt des jeweiligen wenigstens einen aktuellen Signals von dem Signalempfänger wenigstens eine Assistenzmeldung aus.

In dieser Ausbildung gibt das Sanitäranlagenmanagementsystem Empfehlungen, wirkt also als Assistenzsystem. Hier werden Aktionen und/oder Optimierungen einem Nutzer oder Bediener des Sanitäranlagenmanagementsystems vorgeschlagen, die Entscheidungen trifft darauf basierend der Nutzer oder Bediener.

Bei dem erfindungsgemäßen Sanitäranlagenmanagementverfahren wird die Datenbasis für die Entscheidungsfindung primär von der wenigstens einen Sanitärinstallation und/oder von wenigstens einem an der wenigstens einen Sanitärinstallation vorgesehenen Basissensor geliefert. Die wenigstens eine Sanitärinstallation und/oder der wenigstens eine Basissensor liefert/n beispielsweise Betriebswerte, also Daten, zum Wasserverbrauch und/oder über die Anzahl von Schaltzyklen oder Benutzungen der wenigstens einen Sanitärinstallation.

Darüber hinaus können bei dem erfindungsgemäßen Sanitäranlagenmanagementverfahren Daten von Sensoren oder Steuerungen anderer Bereiche der Gebäudetechnik sowie weiterer Datenquelle ausgewertet werden. In einer Weiterbildung des erfindungsgemäßen Sanitäranlagenmanagementverfahrens ist daher vorgesehen, dass das Datenverarbeitungs- und Signalausgabesystem von wenigstens einem/einer nicht der Sanitäranlage zugehörigen Zusatzsensor und/oder Steuerung und/oder von wenigstens einer nicht der Sanitäranlage zugehörigen Datenquelle externe Daten erhält und die externen Daten in die Ableitung der wenigstens einen Regel und/oder des wenigstens einen Algorithmus und/oder des wenigstens einen Nutzungsszenarios einbezieht.

Solche weitere Datenquellen können beispielsweise Türsteuerungen sein. So kann z. B. anhand dieser ermittelt werden, wann Personen einen Raum oder ein Gebäude, in dem die wenigstens eine Sanitärinstallation vorgesehen ist, betreten haben.

Solche weiteren Datenquellen können auch Lichtsteuerungen sein. Anhand dieser kann ebenfalls eine Anwesenheit von Personen in einem Raum oder einem Gebäude, in dem die wenigstens eine Sanitärinstallation vorgesehen ist, ermittelt werden.

Die angeführten externen Daten können beispielsweise Wetterdaten und/oder Wettervorhersagedaten sein.

Ferner können zum Auslesen externer Daten Kalender und/oder Spielpläne und/oder Fahrpläne und/oder Flugpläne und/oder Stundenpläne und/oder Belegungspläne z. B. für Besprechungsräume und/oder Öffnungszeiten z. B. von Restaurants, Museen, Behörden oder Institutionen genutzt werden. Diese Daten können von einem Theater und/oder einem Kino und/oder einem Stadion und/oder einem Bahnhof und/oder einem Flughafen und/oder einer Schule oder Hochschule oder ähnlichen Institutionen erhalten werden.

Durch Analyse des wenigstens einen Betriebswertes der wenigstens einen Sanitärinstallation in Kombination mit weiteren Daten aus dem Bereich der Wasserversorgung, wie Druck und/oder Temperatur und/oder Wasserqualität, und/oder Abwasserentsorgung, wie beispielsweise Verstopfungserkennung, können Muster erkannt werden, die einen möglichen Ausfall vorhersagen. In einem solchen Fall kann bei dem erfindungsgemäßen Sanitäranlagenmanagementverfahren ein vorausschauender Service an der Sanitäranlage ausgelöst werden und/oder es können Einstellungen an der Sanitäranlage für einen sicheren Betrieb vorgenommen werden.

Durch Analyse aktueller und historischer Nutzungsdaten der Sanitäranlage in dem erfindungsgemäßen Sanitäranlagenmanagementverfahren können Reinigungszyklen an der Sanitäranlage optimiert werden, was zu einer Kosteneinsparung und Qualitätsverbesserung führt. Zudem können hierbei Prognosen zur Optimierung von konkreten Reinigungszeiten verwendet werden. Beispielsweise können vor einer erwarteten Stoßzeit Verbrauchsmaterialien aufgefüllt werden. Ferner kann nach einer Stoßzeit eine Reinigung erfolgen.

Mit Hilfe des erfindungsgemäßen Sanitäranlagenmanagementverfahrens können außerdem typische Szenarien und Gewohnheiten zur Verbesserung des Komforts und des Nutzererlebnisses verwendet werden. Beispielsweise kann eine Duschtemperatur und/oder eine Beleuchtung speziell auf das zu erwartende Nutzerszenario abgestimmt werden.

Darüber hinaus ist es möglich, bei dem erfindungsgemäßen Sanitäranlagenmanagementverfahren Daten von Nutzern der wenigstens einen Sanitärinstallation zu nutzen. Damit können bestimmte Nutzer erkannt und/oder identifiziert werden. Solche Daten können beispielsweise biometrische Daten der Nutzer sein. Es kann jedoch auch eine Identifizierung der Nutzer über Daten auf deren Smartphone oder eine spezielle RFID z. B. auf der Kleidung und/oder an persönlichen Gegenständen, wie einem Schlüsselbund oder einer Chipkarte, des jeweiligen Nutzers erfolgen.

Weitere externe Daten können sich aus einem Nutzerfeedback ergeben. Beispielsweise kann an der wenigstens einen Sanitärinstallation eine Eingabevorrichtung für Nutzer der wenigstens einen Sanitärinstallation, wie beispielsweise einem Sperrventil, vorgesehen sein, an welcher diese Fehler oder Fehlalarme bestätigen können.

Bei dem erfindungsgemäßen Verfahren kommt ein Sanitäranlagenmanagementsystem zum Einsatz. Das Sanitäranlagenmanagementsystem weist wenigstens eine Sanitärinstallation, die an eine Wasserzuführung gekoppelt ist und/oder in eine Wasserführung eingebunden ist, und an der wenigstens ein Betriebswert der wenigstens einen Sanitärinstallation erfassbar ist, eine mit der wenigstens einen Sanitärinstallation verbundene, einen Datensender und einen Signalempfänger aufweisende Sanitäranlagensteuereinrichtung und ein mit der Sanitäranlagensteuereinrichtung über den Datensender und den Signalempfänger kommunizierendes Datenverarbeitungs- und Signalausgabesystem auf, wobei das Datenverarbeitungs- und Signalausgabesystem ein maschinell lernendes und/oder ein ein künstliches neuronales Netz aufweisendes System und/oder ein Expertensystem ist.

Vorzugsweise ist das Datenverarbeitungs- und Signalausgabesystem wenigstens ein(en) mit Methoden der künstlichen Intelligenz trainiertes/n Regelwerk und/oder Klassifikator aufweisendes System.

Das Sanitäranlagenmanagementsystem kann ein maschinell oder selbst lernendes System als Datenverarbeitungs- und Signalausgabesystem aufweisen. Das maschinelle Lernen des verwendeten Datenverarbeitungs- und Signalausgabesystems kann überwacht erfolgen (im Englischen als supervised learning bezeichnet), wobei das Datenverarbeitungs- und Signalausgabesystem mit vordefinierten Daten trainiert wird, und/oder es kann unüberwacht erfolgen (im Englischen als unsupervised learning bezeichnet), wobei das Datenverarbeitungs- und Signalausgabesystem im Betrieb fortwährend auf Basis der übermittelten Daten lernt, und/oder es kann bestärkt erfolgen (im Englischen als reinforcement learning bezeichnet), wobei das Datenverarbeitungs- und Signalausgabesystem eine Rückkopplung oder Rückmeldung von wenigstens einem anderen Bestandteil und/oder wenigstens einem Nutzer des Sanitäranlagenmanagementsystems erhält, ob das Lernen zu einem Erfolg geführt hat. Ein solcher Erfolg kann beispielswiese vorliegen, wenn eine in den Einstellungen des Sanitäranlagenmanagementsystems durchgeführte Änderung einen Wasserverbrauch des Sanitäranlagenmanagementsystems reduziert hat. Beispielsweise kann das Sanitäranlagenmanagementsystem in einem Startmodus überwacht lernen und im einem sich daran anschließenden Betriebsmodus zur Verfeinerung und/oder Optimierung des bereits Erlernten unüberwacht oder bestärkt lernen.

Entsprechend kann das Datenverarbeitungs- und Signalausgabesystem des Sanitäranlagenmanagementsystems auf vorhergehenden Erfahrungen des Sanitäranlagenmanagementsystems aufbauen, wodurch die Qualität und Effizienz des Sanitäranlagenmanagementsystems gesteigert wird, je länger es in Betrieb ist. Alternativ oder zusätzlich dazu kann das Sanitäranlagenmanagementsystem ein ein künstliches neuronales Netz aufweisendes System aufweisen. Ein solches System kann beispielsweise wenigstens ein(en) mit Methoden der künstlichen Intelligenz trainiertes/n Regelwerk und/oder Klassifikator aufweisen. Darüber hinaus kann das Sanitäranlagenmanagementsystem ein Expertensystem aufweisen. Ein Expertensystem ist ein Computerprogramm, welches auf Grundlage einer Wissensbasis Entscheidungen trifft. In all diesen Fällen kann das Sanitäranlagenmanagementsystem noch schneller Entscheidungen treffen, als dies durch einen Menschen schaffbar ist. Ferner können bei Einsatz des Sanitäranlagenmanagementsystems Fehler schnell erkannt und vermieden werden.

Das Sanitäranlagenmanagementsystem nutzt Methoden der künstlichen Intelligenz, um die an das Datenverarbeitungs- und Signalausgabesystem übermittelten Daten zu analysieren und darauf basierend verbesserte Signale an die Sanitäranlagensteuereinrichtung zurück zu übermitteln. Die verbesserten Signale werden von der Sanitäranlagensteuereinrichtung zur Steuerung wenigstens einer Funktion oder Aktion der wenigstens einen Sanitärinstallation genutzt und führen damit zu einer verbesserten Einstellung der jeweiligen Sanitärinstallation. Im Ergebnis dieser optimierten Einstellung an der Sanitärinstallation werden an dieser verbesserte Betriebswerte gemessen und/oder Havarien schnell erkannt oder vermieden und/oder Wasserverbräuche verringert und/oder Stoßzeiten anhand historischer Nutzungsdaten prognostiziert.

Das Sanitäranlagenmanagementsystem kann unterschiedliche Kommunikationsstrukturen aufweisen. Dabei ist in vorteilhaften Ausführungsformen des Sanitäranlagenmanagementsystems das Datenverarbeitungs- und Signalausgabesystem entweder ein Computer oder ein Mobilgerät mit Computerfunktionalität und -konnektivität oder eine über das Internet verfügbare Informatikinfrastruktur oder Gebäudemanagementsystem. Als Computer kommt beispielsweise ein PC oder ein Tablet in Betracht. Als Mobilgerät mit Computerfunktionalität und -konnektivität kann ein Smartphone eingesetzt werden. Eine über das Internet verfügbare Informatikinfrastruktur kann beispielsweise durch eine Cloud zur Verfügung gestellt werden. Entsprechend kann je nach Ausführungsform des Sanitäranlagenmanagementsystems der Basissensor über den Datensender direkt entweder mit dem Computer oder mit dem Smartphone oder mit der Cloud oder mit dem Gebäudemanagementsystem kommunizieren. Umgekehrt kann eine direkte Kommunikation zwischen dem Computer und dem Signalempfänger und damit der Sanitäranlagensteuereinrichtung oder zwischen dem Smartphone und dem Signalempfänger und damit der Sanitäranlagensteuereinrichtung oder zwischen der Cloud und dem Signalempfänger und damit der Sanitäranlagensteuereinrichtung oder zwischen dem Gebäudemanagementsystem und dem Signalempfänger und damit der Sanitäranlagensteuereinrichtung erfolgen.

In speziellen Varianten des Sanitäranlagenmanagementsystems ist zwischen dem Datensender und dem Datenverarbeitungs- und Signalausgabesystem und/oder zwischen dem Signalempfänger und dem Datenverarbeitungs- und Signalausgabesystem eine Daten- und/oder Signalzwischenverarbeitungseinrichtung vorgesehen. Als Daten- und/oder Signalzwischenverarbeitungseinrichtung kann beispielsweise ein Gateway verwendet werden. Entsprechend kann die wenigstens eine Sanitärinstallation und/oder wenigstens ein daran vorgesehener, Betriebswerte der Sanitärinstallation erfassender Basissensor über den Datensender und das Gateway mit dem Computer oder dem Smartphone oder der Cloud oder dem Gebäudemanagementsystem kommunizieren. Umgekehrt kann die Kommunikation zwischen dem Computer oder dem Smartphone oder der Cloud oder dem Gebäudemanagementsystem mit der Sanitäranlagensteuereinrichtung über das Gateway und den Signalempfänger erfolgen.

Bei diesen Ausführungsformen des Sanitäranlagenmanagementsystems wird mit dem Computer oder dem Smartphone oder der Cloud oder dem Gebäudemanagementsystem eine zentrale Einheit zur Analyse und/oder Entscheidung angewendet.

In weiteren Ausführungsformen des Sanitäranlagenmanagementsystems ist das Datenverarbeitungs- und Signalausgabesystem in Form eines wenigstens einen Basissensor oder eine elektronische Steuerung einer der Sanitärinstallationen und wenigstens einen mit dem wenigstens einen Basissensor kommunizierenden Netzwerksensor oder eine elektronische Steuerung einer weiteren der Sanitärinstallationen aufweisenden vermaschten Netzwerkes ausgebildet. Ein vermaschtes Netzwerk wird auch als Mesh-Network bezeichnet. Beispielsweise kann hier ein Funknetzwerk, wie ein Bluetooth-Mesh, verwendet werden. Der Netzwerksensor kann ebenfalls ein Basissensor sein. In diesen Ausführungsformen des Sanitäranlagenmanagementsystems wird ein dezentrales System genutzt, in dem die Basis- und Netzwerksensoren direkt untereinander kommunizieren und Entscheidungen im Netz (Mesh) getroffen werden können. Das heißt, einer der Basissensoren oder einer der Netzwerksensoren kann Entscheidungen auf Basis von von anderen in dem Netz befindlichen Basis- oder Netzwerksensoren ermittelten Betriebsdaten treffen.

Ausführungsbeispiele des Sanitäranlagenmanagementsystems, einschließlich der jeweils damit ausgeführten Ausführungsformen des erfindungsgemäßen Sanitäranlagenmanagementverfahrens werden im Folgenden anhand von Figuren näher erläutert, wobei
- Figur 1: schematisch eine allgemeine Struktur einer Ausführungsform eines bei dem erfindungsgemäßen Verfahren verwendeten Sanitäranlagenmanagementsystems zeigt, woraus auch der allgemeine Ablauf der zugehörigen Ausführungsform des erfindungsgemäßen Sanitäranlagenmanagementverfahrens hervorgeht, zeigt;
- Figur 2: schematisch eine weitere Ausführungsform eines bei dem erfindungsgemäßen Verfahren verwendbaren Sanitäranlagenmanagementsystems zeigt, bei der dieses ein Leckageschutzsystem auf Basis einer vermaschten Kommunikation ist;
- Figur 3: schematisch einen allgemeinen Ablauf eines erfindungsgemäßen Sanitäranlagenmanagementverfahrens zum Leckageschutz zeigt;
- Figur 4: schematisch eine bei einer Ausführungsform eines bei dem erfindungsgemäßen Verfahren verwendbaren Sanitäranlagenmanagementsystems nutzbare, auf einem vermaschten Netzwerk basierende Kommunikationsstruktur zeigt;
- Figur 5: schematisch eine bei einer Ausführungsform eines bei dem erfindungsgemäßen Verfahren verwendbaren Sanitäranlagenmanagementsystems nutzbare Kommunikationsstruktur mit einer Cloud zeigt;
- Figur 6: schematisch eine bei einer Ausführungsform eines bei dem erfindungsgemäßen Verfahren verwendbaren Sanitäranlagenmanagementsystems nutzbare Kommunikationsstruktur mit einem Gateway zeigt;
- Figur 7: schematisch eine bei einer Ausführungsform eines bei dem erfindungsgemäßen Verfahren verwendbaren Sanitäranlagenmanagementsystems nutzbare Kommunikationsstruktur mit einem Gateway und einem aus einer Cloud und mehreren Geräten zusammengesetzten Datenverarbeitungsund Signalausgabesystem zeigt;
- Figur 8: schematisch eine bei einer Ausführungsform eines bei dem erfindungsgemäßen Verfahren verwendbaren Sanitäranlagenmanagementsystems nutzbare Kommunikationsstruktur mit einem Gateway und mehrere Geräte aufweisenden Datenverarbeitungs- und Signalausgabesystem zeigt; und
- Figur 9: schematisch eine bei einer Ausführungsform eines bei dem erfindungsgemäßen Verfahren verwendbaren Sanitäranlagenmanagementsystems nutzbare einfache Kommunikationsstruktur zeigt.

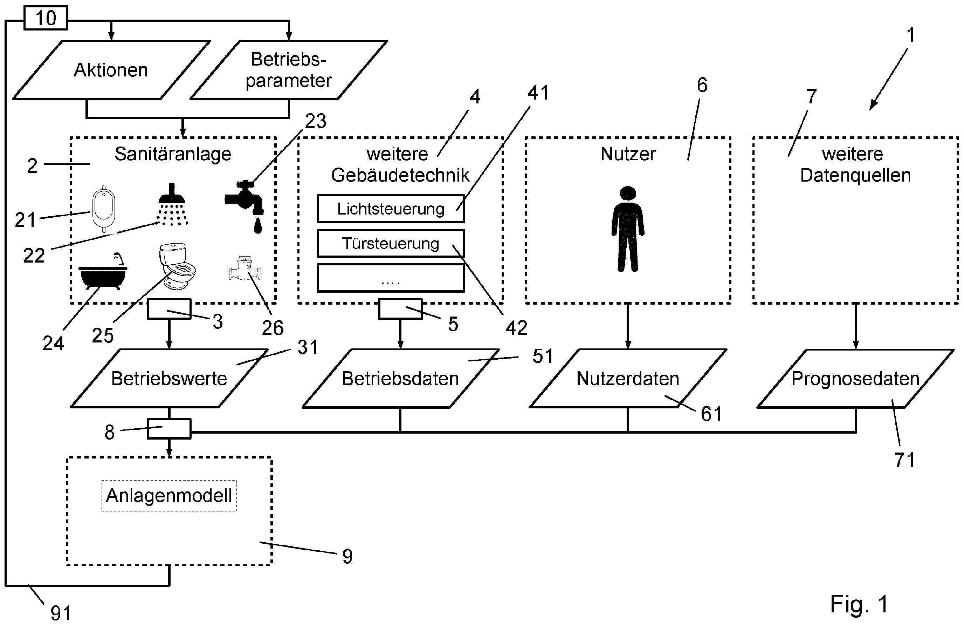

In Figur 1 ist ein genereller Ablauf einer Ausführungsform eines Sanitäranlagenmanagementverfahrens und die Einbettung von Algorithmen der künstlichen Intelligenz in ein Sanitäranlagenmanagementsystem 1 dargestellt.

Kern des Sanitäranlagenmanagementsystems 1 ist eine Sanitäranlage 2. Die Sanitäranlage 2 weist wenigstens eine Sanitärinstallation auf. Kennzeichnend für die wenigstens eine Sanitärinstallation ist, dass sie an eine Wasserzuführung gekoppelt ist und/oder in eine Wasserführung eingebunden ist. Beispielsweise kann die wenigstens eine Sanitärinstallation wenigstens ein Urinal 21 und/oder wenigstens eine Dusche 22 und/oder wenigstens eine Waschtischarmatur 23 und/oder wenigstens eine Badewanne 24 und/oder wenigstens eine Toilette 25 und/oder wenigstens ein Sperrventil 26 sein oder aufweisen.

Das Sanitäranlagenmanagementsystem 1 weist ferner in dem gezeigten Ausführungsbeispiel wenigstens einen Basissensor 3 auf, mit dem wenigstens ein Betriebswert der wenigstens einen Sanitärinstallation erfasst wird. In anderen Ausführungsformen kann der wenigstens eine Basissensor 3 auch weggelassen werden oder als Zusatzsensor(en) fungieren. In diesen Fällen kann direkt an der wenigstens einen Sanitärinstallation oder mittels eines daran vorgesehenen elektronischen Steuergerätes wenigstens ein Betriebswert der Sanitärinstallation, wie beispielsweise deren Schaltzyklen, deren Wasserverbrauch o. ä., erfasst werden oder die jeweilige Sanitärinstallation ihre eigenen Betriebswerte liefern.

Zusätzlich gehört zu dem Sanitäranlagenmanagementsystem 1 in dem dargestellten speziellen Ausführungsbeispiel weitere Gebäudetechnik 4, welche beispielsweise eine Lichtsteuerung 41 und/oder eine Türsteuerung 42 eines oder mehrerer Räume eines Gebäudes umfassen kann. In anderen Ausführungsformen kann auch die weitere Gebäudetechnik 4 nicht Bestandteil des Sanitäranlagenmanagementsystems sein.

An der entsprechenden Gebäudetechnik 4 ist/sind ein oder mehrere Zusatzsensor(en) 5, wie z. B. Bewegungs- oder Präsenzmelder, vorgesehen, mit dem/den Betriebsdaten der Gebäudetechnik 4, wie beispielsweise Schaltdaten der Lichtsteuerung 41 und/oder Zugangsdaten der Türsteuerung 42 erfasst werden.

Außerdem ist in das Sanitäranlagenmanagementsystem 1 in dem gezeigten speziellen Ausführungsbeispiel wenigstens ein Nutzer 6 der wenigstens einen Sanitärinstallation einbezogen. Von dem wenigstens einen Nutzer 6 können Nutzerdaten, wie beispielsweise eine Anzahl von die wenigstens eine Sanitärinstallation nutzenden Nutzern 6, deren Alter, Geschlecht und/oder Stimmung erfasst werden. Darüber hinaus kann von dem wenigstens einen Nutzer 6 ein Nutzerfeedback abgegeben werden, welches ebenfalls in die Nutzerdaten einfließen kann. In anderen Ausführungsformen der vorliegenden Erfindung ist kein Nutzer in das Sanitäranlagenmanagementsystem einbezogen.

In dem gezeigten speziellen Ausführungsbeispiel weist das Sanitäranlagenmanagementsystem 1 auch wenigstens eine weitere Datenquellen 7 auf. Solche weiteren Datenquellen 7 können beispielsweise Fahrpläne, Spielpläne, Stundenpläne, Flugpläne, Öffnungszeiten, Wettervorhersageberichte oder ähnliches sein. Aus der wenigstens einen weiteren Datenquelle 7 können Prognosedaten abgeleitet werden. So kann beispielsweise ein Spielplan eines Theaters genutzt werden, um festzustellen, wann ein Stück läuft und wann Pause ist. Ist beispielsweise die Pause beendet und es läuft kontinuierlich eine Toilettenspülung, kann das ein Indiz für eine Fehlfunktion der jeweiligen Toilette sein. In anderen Ausführungsformen der vorliegenden Erfindung kann das jeweilige Sanitäranlagenmanagementsystem auch keine weiteren Datenquellen aufweisen.

Die jeweiligen Daten, also in dem gezeigten Beispiel die Betriebswerte 31 der wenigstens einen Sanitärinstallation, die optional erfassten Betriebsdaten 51 der Gebäudetechnik 4, die optional erfassten Nutzerdaten 61 von dem wenigstens einen Nutzer 6 und die optional erfassten Prognosedaten 71 der wenigstens einen weiteren Datenquelle 7, welche im Folgenden zusammengefasst als Daten bezeichnet werden, werden durch wenigstens einen Datensender 8 an ein Datenverarbeitungs- und Signalausgabesystem 9 des Sanitäranlagenmanagementsystems 1 übertragen.

Das Datenverarbeitungs- und Signalausgabesystem 9 ist in dem gezeigten Ausführungsbeispiel ein Computer, kann jedoch in anderen Ausführungsformen der vorliegenden Erfindung auch ein Smartphone, eine Cloud oder ein Gebäudemanagementsystem oder eine Kombination dieser Möglichkeiten sein.

In dem Datenverarbeitungs- und Signalausgabesystem 9 werden die übermittelten Daten verarbeitet. Dabei erfolgt in dem gezeigten Ausführungsbeispiel eine Ausbildung eines Anlagenmodells. Bei dieser Anlagenmodellbildung kommen Algorithmen der künstlichen Intelligenz zur Anwendung. Die Anlagenmodellbildung ermöglicht es, aus den übermittelten Daten Nutzungsszenarien abzuleiten und/oder eine Korrelation zwischen den Betriebswerten verschiedener Sanitärinstallationen der Sanitäranlage 2 vorzunehmen und/oder Wechselwirkungen zwischen verschiedenen Elementen der Sanitäranlage 2, wie beispielsweise zwischen der Wasserversorgung und der wenigstens einen Sanitärinstallation, zu erkennen.

Das von dem Datenverarbeitungs- und Signalausgabesystem 9 gebildete Anlagenmodell beinhaltet in dem dargestellten Beispiel die Wasserversorgung, die wenigstens eine Sanitärinstallation und damit den wenigstens einen Wasserverbraucher, den Einfluss der weiteren Gebäudetechnik 4, den Einfluss der Nutzer 6 und der Prognosedaten 71 sowie die Wechselwirkungen zwischen diesen Elementen.

Basierend auf dem Anlagenmodell leitet das Datenverarbeitungs- und Signalausgabesystem 9 Entscheidungen und/oder Vorschläge zum weiteren Vorgehen ab. Dies können eine Vorhersage von Nutzungssituationen und/oder eine Optimierung von Betriebsparametern der Sanitäranlage 2, wie eine Optimierung des Wasserverbrauchs oder des Verbrauchs von anderen Medien und/oder eine Optimierung des Nutzererlebnisses und/oder eine Optimierung des Services an der Sanitäranlage 2 beinhalten. Mit dem Datenverarbeitungs- und Signalausgabesystem 9 können ferner aktiv Aktionen ausgelöst werden. Zudem kann von dem Datenverarbeitungs- und Signalausgabesystem 9 wenigstens eine Information an den oder die Nutzer 6 und/oder an eine Gebäudeverwaltung und/oder an wenigstens einen Installateur gegeben werden.

Die Entscheidungen des Datenverarbeitungs- und Signalausgabesystems 9 werden als wenigstens ein Signal 91 von dem Datenverarbeitungs- und Signalausgabesystem 9 an wenigstens einen Signalempfänger 10 der Sanitäranlagensteuereinrichtung übermittelt. Daraufhin löst die Sanitäranlagensteuereinrichtung wenigstens eine Aktion an der Sanitäranlage 2 aus und/oder ändert wenigstens einen Betriebsparameter der Sanitäranlage 2. Eine solche Aktion kann beispielsweise eine Spülauslösung und/oder eine Reinigungssperre und/oder ein Abschalten der Wasserversorgung und/oder eine thermische Desinfektion und/oder eine Aktivierung einer Beleuchtung und/oder eine andere sanitärinstallationsspezifische Aktion sein. Veränderbare Betriebsparameter der Sanitäranlage 2 können beispielsweise ein Spülmenge und/oder eine Empfindlichkeit und/oder eine Maximallaufzeit und/oder ein Durchfluss und/oder ein Druck und/oder eine Wassertemperatur und/oder ein zeitlicher Ablauf und/oder ein anderer Parameter der wenigstens einen Sanitärinstallation sein.

Die wenigstens eine Aktion und/oder die wenigstens eine Betriebsparameteränderung wirkt sich direkt auf die Sanitäranlage 2 aus.

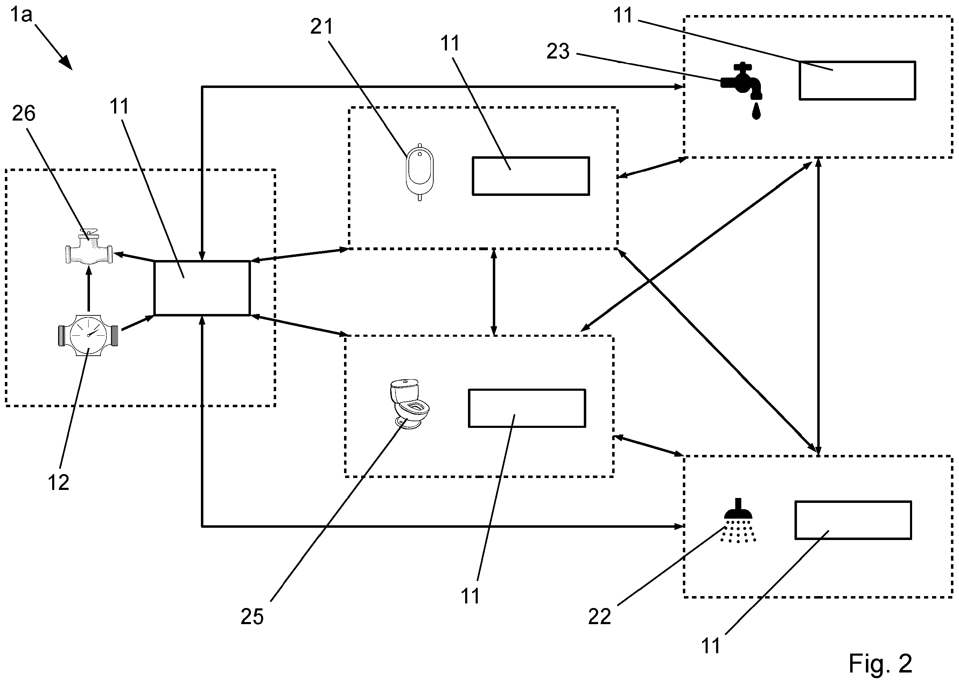

Figur 2 zeigt schematisch eine weitere Ausführungsform des Sanitäranlagenmanagementsystems 1a. Das Sanitäranlagenmanagementsystem 1a ist ein Leckageschutzsystem auf Basis einer vermaschten Kommunikation.

Das Sanitäranlagenmanagementsystem 1a beinhaltet mehrere Sanitärinstallationen, wie ein Sperrventil 26, ein Urinal 21, eine Waschtischarmatur 23, eine Toilette 25 und eine Dusche 22. Jede der Sanitärinstallationen weist ein eigenes elektronisches Steuergerät 11 auf. Zudem ist jede der Sanitärinstallationen mit jeder anderen der Sanitärinstallationen über eine Datenkommunikation verbunden, wobei Daten von einer Sanitärinstallation zu einer anderen jeweils wechselseitig übertragen werden können. Damit bilden die Sanitärinstallationen ein vermaschtes Netzwerk aus, welches hier als Datenverarbeitungs- und Signalausgabesystem fungiert.

In dem gezeigten Ausführungsbeispiel ist an dem Sperrventil 26 ein Durchflussmessgerät 12 vorgesehen, mit dem wenigstens ein Durchfluss von Wasser durch das Sperrventil 26 gemessen wird. Das Durchflussmessgerät 12 ist ferner mit dem elektronischen Steuergerät 11 des Sperrventils 26 verbunden. Somit erhält das elektronische Steuergerät 11 des Sperrventils 26 nicht nur Daten von dem Durchflussmessgerät 12, sondern auch von allen anderen Sanitärinstallationen das Sanitäranlagenmanagementsystems 1a. Entsprechend kann das elektronische Steuergerät 11 des Sperrventils 26 zusätzlich zu den mit dem Durchflussmessgerät 12 gemessenen Betriebswerten des Sperrventils 26 Betriebsdaten der anderen Sanitärinstallationen heranziehen und so typische Nutzungsszenarien erkennen und erlernen. Das Sanitäranlagenmanagementsystem 1a stellt somit eine intelligente Leckageerkennung zur Verfügung. Damit ist es bei dem Sanitäranlagenmanagementsystem 1a im Vergleich zu herkömmlichen Leckageschutzsystemen, die lediglich auf Basis einer Durchflussmessung und/oder anderer Daten aus einer Wasserversorgung, wie beispielsweise einem Wasserdruck, arbeiten und bei welchen anhand einfacher Regeln, wie festgelegten Grenzwerten für die Wassermenge, Durchfluss und Wasserentnahmezeit, fehlerhafte Situationen feststellen und zu Wasserzufuhr stoppen, leichter, Fehlersituationen zu erkennen.

Dabei können mehrere der Sanitäranlagenmanagementsysteme 1a in einem Gebäude vorgesehen werden. Beispielsweise kann durch mehrere der Sanitäranlagenmanagementsysteme 1a ein kaskadierter Leckageschutz in einer Wasserzuleitung und pro Etage oder Raum ausgebildet werden. Dabei können die Daten der mehreren Sanitäranlagenmanagementsysteme 1a miteinander abgeglichen werden.

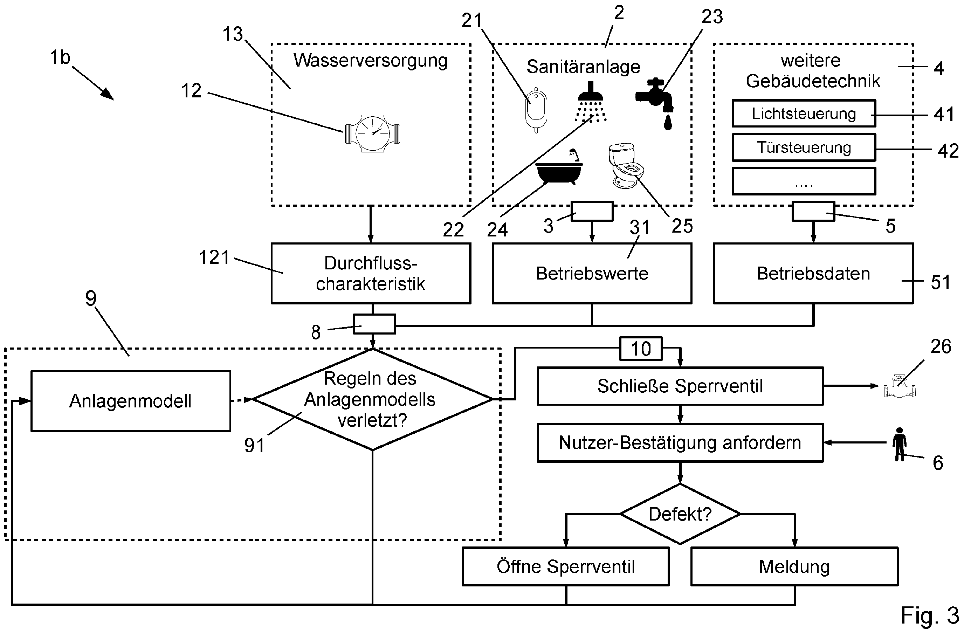

Figur 3 zeigt einen allgemeinen Ablauf eines erfindungsgemäßen Sanitäranlagenmanagementverfahrens zum Leckageschutz anhand des schematisch dargestellten Sanitäranlagenmanagementsystems 1b. Der gezeigte allgemeine Ablauf gilt auch für das Mesh-Netzwerk in Figur 2.

In dem Sanitäranlagenmanagementsystem 1b wird von einem in einer Wasserversorgungsleitung 13 befindlichen Durchflussmessgerät 12 eine Durchflusscharakteristik 121 erfasst, beispielsweise ein Durchfluss durch die Wasserversorgungsleitung 13 gemessen. Alternativ können anstelle des Durchflussmessgerätes 12 auch ein Druckmesser oder andere Sensoren in der Wasserversorgungsleitung 13 zur Ermittlung der Durchflusscharakteristik 121, wie einer Wassermenge, einem Durchflussprofil oder einem Druck in der Wasserversorgungsleitung 13, verwendet werden.

Die Wasserversorgungsleitung 13 versorgt Sanitärinstallationen einer Sanitäranlage 2 mit Wasser. In dem gezeigten Beispiel weist die Sanitäranlage 2 mehrere Sanitärinstallationen, wie ein Urinal 21, eine Dusche 22, eine Waschtischarmatur 23, eine Badewanne 24 und eine Toilette 25 auf. Von diesen Sanitärinstallationen werden in dem gezeigten Ausführungsbeispiel durch wenigstens einen Basissensor 3 Betriebswerte 31 erfasst. In anderen Ausführungsbeispielen kann, wie oben bereits erwähnt, der wenigstens eine Basissensor 3 auch weggelassen werden oder als Zusatzsensor fungieren. Dann generieren die Steuerungen der einzelnen Sanitärinstallationen selbst ihre Betriebswerte.

Zusätzlich gehört zu dem Sanitäranlagenmanagementsystem 1b in dem dargestellten Ausführungsbeispiel weitere Gebäudetechnik 4, welche beispielsweise eine Lichtsteuerung 41 und/oder eine Türsteuerung 42 eines oder mehrerer Räume eines Gebäudes umfassen kann. Die weitere Gebäudetechnik 4 muss bei anderen Ausführungsformen der Erfindung nicht zu dem jeweiligen Sanitäranlagenmanagementsystem dazu gehören.

An der entsprechenden Gebäudetechnik 4 ist/sind ein oder mehrere Zusatzsensor(en) 5, wie z. B. Bewegungs- oder Präsenzmelder, vorgesehen, mit dem/den Betriebsdaten der Gebäudetechnik 4, wie beispielsweise Schaltdaten der Lichtsteuerung 41 und/oder Zugangsdaten der Türsteuerung 42 erfasst werden.

Die Daten der Durchflusscharakteristik 121, die Betriebswerte 31 und die optional erfassten Betriebsdaten 51 werden von wenigstens einem Datensender 8 an ein Datenverarbeitungs- und Signalausgabesystem 9 übermittelt. Das Datenverarbeitungs- und Signalausgabesystem 9 entwickelt aus den empfangenen Daten ein Anlagenmodell oder vergleicht die empfangenen Daten mit einem bereits bestehenden Anlagenmodell und prüft, ob Regeln dieses Anlagenmodells verletzt werden und/oder verfeinert mittels der empfangenen Daten ein bereits bestehendes Anlagenmodell.

In dieses Anlagenmodell werden Basisregeln aufgenommen. Solche Basisregeln enthalten beispielsweise Grenzwerte, wie einen maximalen Durchfluss durch die Wasserversorgungsleitung 13 zur Erkennung eines Rohrbruchs und/oder Regeln zur Korrelation zwischen Durchfluss- und Verbrauchscharakteristik.

Das Anlagenmodell wird in dem gezeigten Beispiel auf Basis eines Durchfluss- und Verbrauchsprofils, eines Nutzerfeedbacks und Betriebsdaten 51 verfeinert. Diese Verfeinerung kann beispielsweise eine Erkennung typischer Nutzungsszenarien und/oder eine Erkennung nicht-vernetzter Sanitärinstallationen oder anderer Wasserverbraucher und/oder eine Verfeinerung der Korrelation zwischen Durchfluss- und Verbrauchscharakteristik und/oder eine Erstellung von Regeln zur Vorhersage bestimmter Szenarien durch Auswertung historischer Durchfluss- und Verbrauchsdaten und Erkennung typischer Szenarien beinhalten.

Das Anlagenmodell ist hierdurch in der Lage, regelbasiert Defekte und/oder ein ungewöhnliches Nutzungsverhalten zu erkennen.

In dem Datenverarbeitungs- und Signalausgabesystem 9 wird nach Eingang der Daten geprüft, ob die Regeln des Anlagenmodells verletzt sind. Wenn ja, gibt das Datenverarbeitungs- und Signalausgabesystem 9 ein Signal 91 an einen Signalempfänger 10 einer Sanitäranlagensteuereinrichtung zum Schließen eines Sperrventils 26 aus. Nach Erhalt einer Nutzerbestätigung durch einen Nutzer 6 wird abgefragt, ob ein Defekt in einer Wasserzuleitung und/oder -ableitung vorliegt. Wenn nein, war es gegebenenfalls ein Fehlalarm und das Sperrventil 26 wird wieder geöffnet. Wenn ja, bleibt das Sperrventil 26 geschlossen und es ergeht eine Meldung an einen Verantwortlichen. Diese Informationen werden auch an das Anlagenmodell zu dessen weiterer Verfeinerung übermittelt.

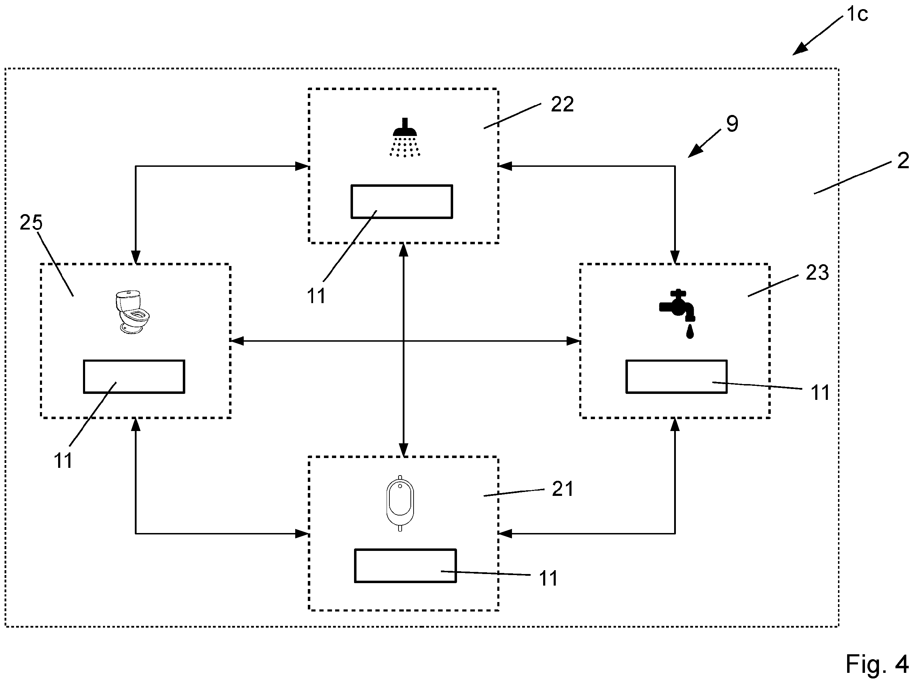

Die Figuren 4 bis 8 zeigen schematisch mögliche bei der vorliegenden Erfindung anwendbare Kommunikationsstrukturen zwischen den einzelnen Sanitärinstallationen und dem jeweils verwendeten Datenverarbeitungs- und Signalausgabesystemprinzip. Der Einfachheit halber wurden jeweils in den Darstellungen die jeweiligen Basissensoren, Datensender und Signalempfänger weggelassen.

Figur 4 zeigt schematisch eine bei einer Ausführungsform des Sanitäranlagenmanagementsystems 1c nutzbare, auf einem vermaschten Netzwerk basierende Kommunikationsstruktur. Ähnlich wie in Figur 2 kommunizieren hier verschiedene Sanitärinstallationen, wie ein Urinal 21 mit zugehörigem elektronischen Steuergerät 11, eine Dusche 22 mit zugehörigem elektronischen Steuergerät 11, eine Waschtischarmatur 23 mit zugehörigem elektronischen Steuergerät 11 und eine Toilette 25 mit zugehörigem elektronischen Steuergerät 11 in einem Netzwerk miteinander, wobei die jeweils zwischen den einzelnen Sanitärinstallationen befindlichen Datenkanäle jeweils eine wechselseitige Kommunikation zwischen den Sanitärinstallationen ermöglichen.

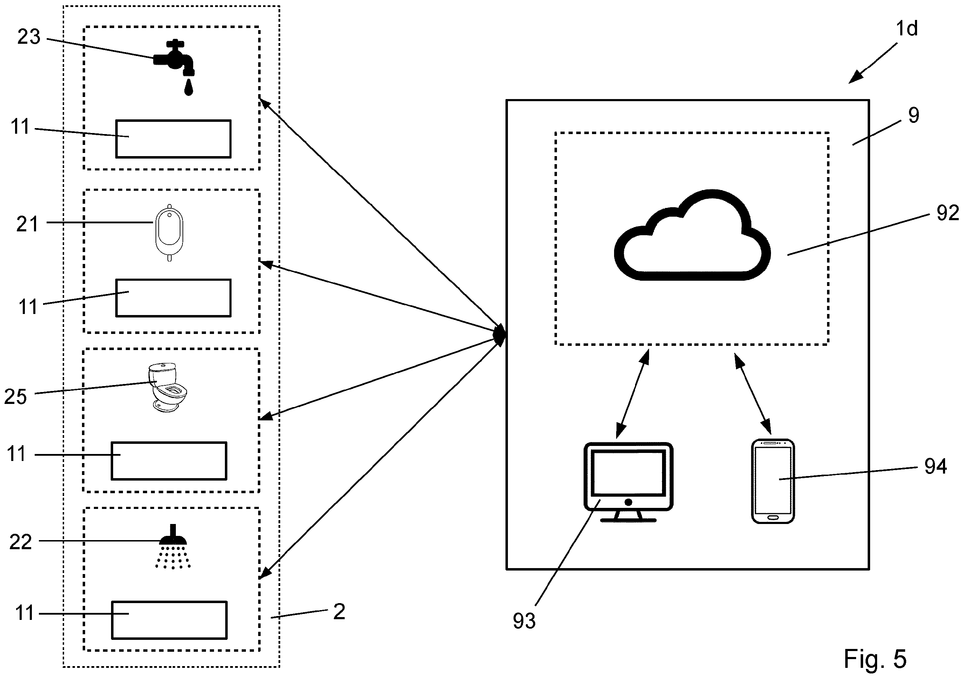

Figur 5 zeigt schematisch eine bei einer Ausführungsform des Sanitäranlagenmanagementsystems 1d nutzbare Kommunikationsstruktur mit einer mit einem Computer 93 und/oder einem Mobilgerät 94, wie einem Smartphone oder einem Tablet, kommunizierenden Cloud 92 als Datenverarbeitungs- und Signalausgabesystem 9. Die Cloud 92 ist eine über das Internet verfügbare Informatikinfrastruktur. In dem gezeigten Ausführungsbeispiel kommuniziert die Cloud 92 mit mehreren jeweils ein elektronisches Steuergerät 11 aufweisenden, nur beispielhaft gezeigten Sanitärinstallationen, wie einer Waschtischarmatur 23, einem Urinal 21, einer Toilette 25 und einer Dusche 22.

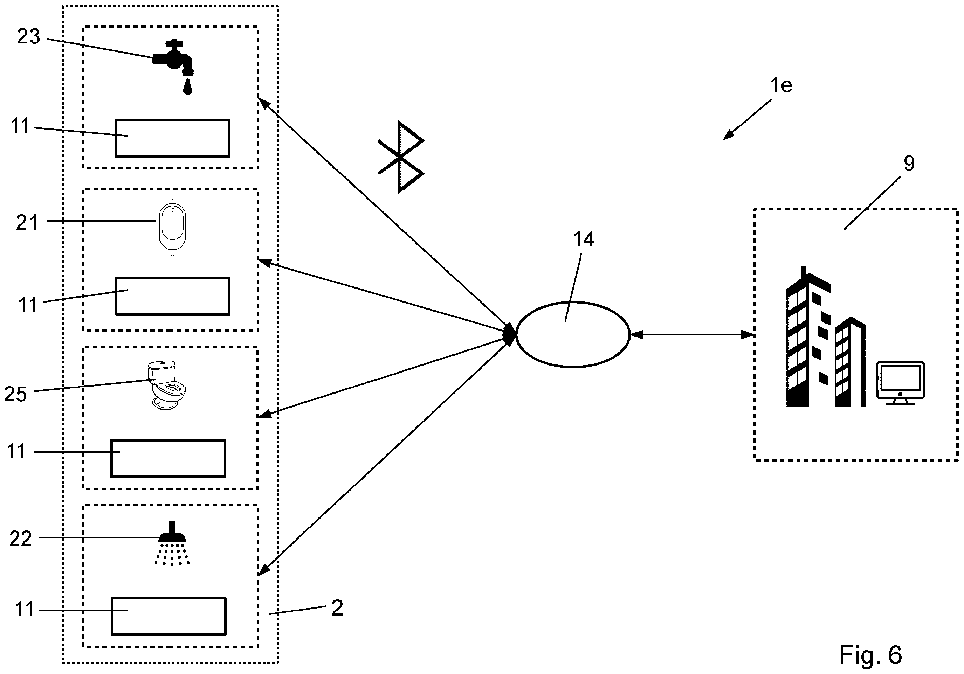

Figur 6 zeigt schematisch eine bei einer Ausführungsform des Sanitäranlagenmanagementsystems 1e nutzbare Kommunikationsstruktur, bei der zwischen jeweils ein elektronisches Steuergerät 11 aufweisenden Sanitärinstallationen, wie einer Waschtischarmatur 23, einem Urinal 21, einer Toilette 25 und einer Dusche 22, und einem als Datenverarbeitungs- und Signalausgabesystem 9 fungierenden Gebäudemanagementsystem ein Gateway als Daten- und/oder Signalzwischenverarbeitungseinrichtung 14 vorgesehen ist. Die Verbindung zwischen den Sanitärinstallationen und dem Gateway erfolgt hier über Funk.

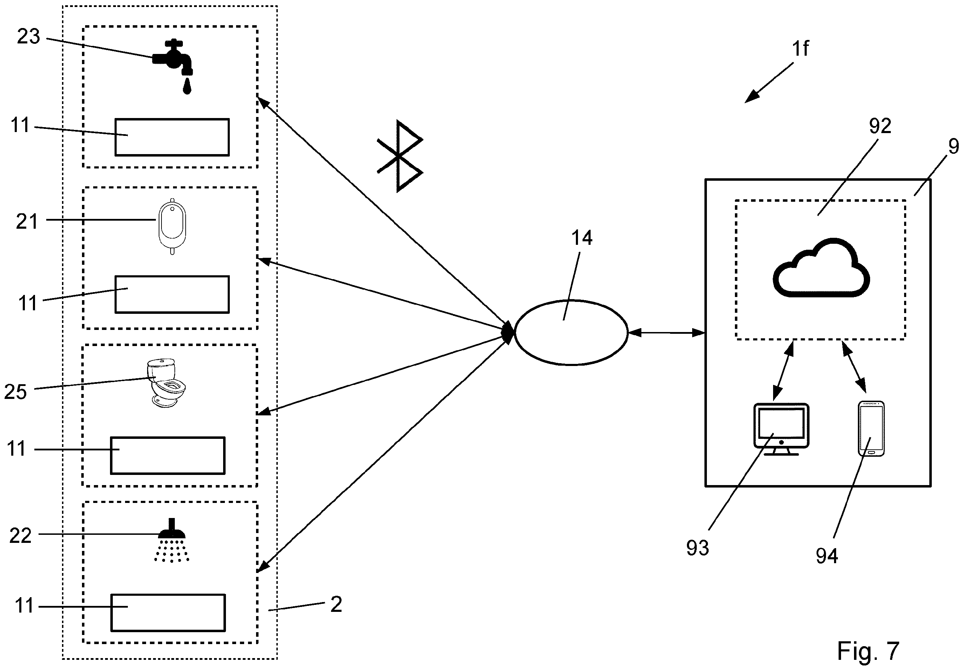

Figur 7 zeigt schematisch eine bei einer Ausführungsform des Sanitäranlagenmanagementsystems 1f nutzbare Kommunikationsstruktur mit einem Gateway und einem aus mehreren Komponenten zusammengesetzten Datenverarbeitungs- und Signalausgabesystem 9. Ähnlich wie in dem Sanitäranlagenmanagementsystem 1d in Figur 5 besteht hier das Datenverarbeitungs- und Signalausgabesystem 9 aus einer mit einem Computer 93 und/oder einem Mobilgerät 94 kommunizierenden Cloud 92 als Datenverarbeitungs- und Signalausgabesystem 9. Die Cloud 92 ist eine über das Internet verfügbare Informatikinfrastruktur. In dem gezeigten Ausführungsbeispiel kommuniziert die Cloud 92 mit dem als Daten- und/oder Signalzwischenverarbeitungseinrichtung 14 fungierenden Gateway sowie mit dem Computer 93 und/oder dem Mobilgerät 94. Das Gateway kommuniziert wiederum jeweils wechselseitig mit mehreren jeweils ein elektronisches Steuergerät 11 aufweisenden, nur beispielhaft gezeigten Sanitärinstallationen, wie einer Waschtischarmatur 23, einem Urinal 21, einer Toilette 25 und einer Dusche 22, über eine Funk-Verbindung.

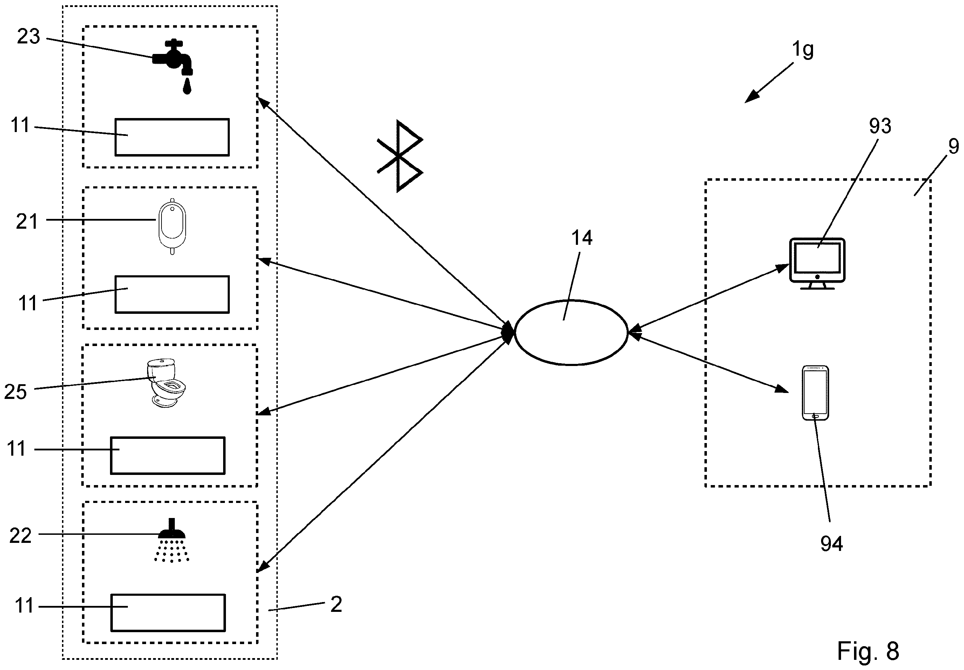

Figur 8 zeigt schematisch eine bei einer Ausführungsform des Sanitäranlagenmanagementsystems 1g nutzbare Kommunikationsstruktur mit einem als Daten- und/oder Signalzwischenverarbeitungseinrichtung 14 fungierenden Gateway und mehreren Geräten eines Datenverarbeitungs- und Signalausgabesystems 9. Das Gateway kommuniziert in dem gezeigten Beispiel jeweils wechselseitig mit mehreren jeweils ein elektronisches Steuergerät 11 aufweisenden, nur beispielhaft gezeigten Sanitärinstallationen, wie einer Waschtischarmatur 23, einem Urinal 21, einer Toilette 25 und einer Dusche 22, über eine Funk-Verbindung. Ferner kommuniziert das Gateway mit einem Computer 93 und/oder einem Mobilgerät 94. Dabei gehören sowohl der Computer 93 als auch das Mobilgerät zu dem Datenverarbeitungs- und Signalausgabesystem 9.

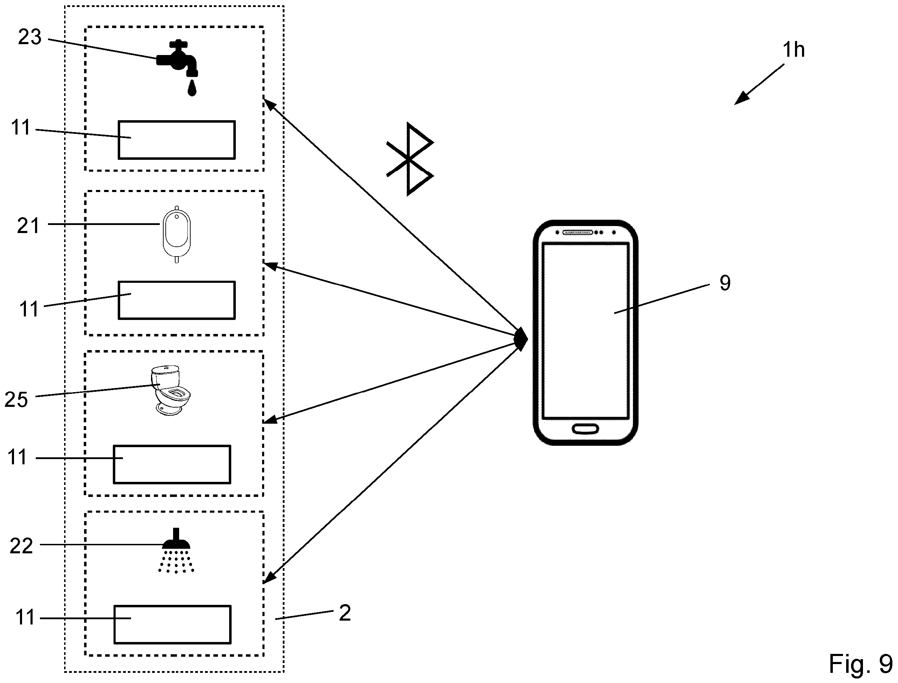

Figur 9 zeigt schematisch eine bei einer Ausführungsform des Sanitäranlagenmanagementsystems 1h nutzbare einfache Kommunikationsstruktur. Bei dieser Kommunikationsstruktur kommunizieren mehrere jeweils ein elektronisches Steuergerät 11 aufweisende, nur beispielhaft gezeigte Sanitärinstallationen, wie eine Waschtischarmatur 23, ein Urinal 21, eine Toilette 25 und eine Dusche 22 jeweils mit einem als Datenverarbeitungs- und Signalausgabesystem 9 fungierenden Mobiltelefon.

## Patentansprüche

1. Sanitäranlagenmanagementverfahren, bei dem bei einer Sanitäranlage (2) mit wenigstens einer Sanitärinstallation, der Wasser zugeführt wird und/oder durch die Wasser fließt, und an der wenigstens ein Betriebswert (31) der wenigstens einen Sanitärinstallation in Form von Daten erfasst wird, mit wenigstens einem mit der wenigstens einen Sanitärinstallation verbundenen Datensender (8) einer Sanitäranlagensteuereinrichtung der wenigstens eine Betriebswert (31) an ein Datenverarbeitungs- und Signalausgabesystem (9) übertragen wird, das Datenverarbeitungs- und Signalausgabesystem (9) den wenigstens einen Betriebswert (31) verarbeitet, davon abhängig wenigstens ein Signal (91) erzeugt und das wenigstens eine Signal (91) an wenigstens einen Signalempfänger (10) der Sanitäranlagensteuereinrichtung übermittelt, wobei das Datenverarbeitungs- und Signalausgabesystem (9) maschinell lernt und/oder unter Verwendung eines künstlichen neuronalen Netzes und/oder eines Expertensystems das wenigstens eine Signal (91) erzeugt,
**dadurch gekennzeichnet,**
**dass** das maschinelle Lernen des Datenverarbeitungs- und Signalausgabesystems (9) überwacht erfolgt, wobei das Datenverarbeitungs- und Signalausgabesystem (9) mit vordefinierten Daten trainiert wird, und/oder unüberwacht erfolgt, wobei das Datenverarbeitungs- und Signalausgabesystem (9) im Betrieb fortwährend auf Basis der ermittelten Daten lernt, und/oder bestärkt erfolgt, wobei das Datenverarbeitungs- und Signalausgabesystem (9) eine Rückkopplung oder Rückmeldung erhält, ob das Lernen zu einem Erfolg geführt hat, und das Datenverarbeitungs- und Signalausgabesystem (9) in einem aktuellen Verfahrensdurchlauf die übermittelten Daten und das wenigstens eine davon abhängig erzeugte Signal (91) der jeweils dem aktuellen vorangegangenen Verfahrensdurchläufe analysiert, daraus wenigstens eine Regel und/oder einen Algorithmus für eine Optimierung des wenigstens einen Betriebswertes (31) der wenigstens einen Sanitärinstallation ableitet, abhängig von den aktuell übermittelten Daten und der wenigstens einen Regel und/oder dem wenigstens einen Algorithmus das wenigstens eine Signal (91) als aktuelles Signal erzeugt und dieses aktuelle Signal an den wenigstens einen Signalempfänger (10) übermittelt.

2. Sanitäranlagenmanagementverfahren nach Anspruch 1, **dadurch gekennzeichnet, dass** das Datenverarbeitungs- und Signalausgabesystem (9) maschinell aus von dem wenigstens einen Datensender (8) übermittelten Daten und an den wenigstens einen Signalempfänger (10) übermittelten Signalen sowie aus der daraus abgeleiteten wenigstens einen Regel und/oder dem wenigstens einen Algorithmus wenigstens ein Nutzungsszenario für die wenigstens eine Sanitärinstallation erlernt und in Abhängigkeit von dem wenigstens einen Nutzungsszenario das jeweilige aktuelle Signal optimiert.

3. Sanitäranlagenmanagementverfahren nach Anspruch 2, **dadurch gekennzeichnet, dass** das Datenverarbeitungs- und Signalausgabesystem (9) maschinell das wenigstens eine Nutzungsszenario unter Berücksichtigung jedes Verfahrensdurchlaufes anpasst.

4. Sanitäranlagenmanagementverfahren nach Anspruch 2 oder 3, **dadurch gekennzeichnet, dass** das Datenverarbeitungs- und Signalausgabesystem (9) maschinell anhand des wenigstens einen Nutzungsszenarios zukünftig von dem Datensender zu erwartende Betriebswerte vorausberechnet.

5. Sanitäranlagenmanagementverfahren nach einem der Ansprüche 2 bis 4, **dadurch gekennzeichnet, dass** das Datenverarbeitungs- und Signalausgabesystem (9) maschinell die von dem wenigstens einen Datensender (8) übermittelten Daten im Vergleich mit der wenigstens einen Regel und/oder dem wenigstens einen Algorithmus und/oder dem wenigstens einen Nutzungsszenario in korrekte und fehleranzeigende Daten eingruppiert.

6. Sanitäranlagenmanagementverfahren nach Anspruch 5, **dadurch gekennzeichnet, dass** das Datenverarbeitungs- und Signalausgabesystem (9) im Falle fehleranzeigender Daten (a) eine Aktion an der Sanitärinstallation oder deren Wasserversorgung auslöst und/oder (b) eine Assistenzmeldung und/oder eine Benachrichtigung ausgibt.

7. Sanitäranlagenmanagementverfahren nach einem der Ansprüche 2 bis 6, **dadurch gekennzeichnet, dass** das Datenverarbeitungs- und Signalausgabesystem (9) bei einer Sanitäranlage (2), die mehrere der wenigstens einen Sanitärinstallation aufweist, aus den jeweiligen Regeln und/oder Algorithmen und/oder Nutzungsszenarios ein Anlagenmodell ausbildet, in dem sowohl die Betriebswerte aller einzelnen Sanitärinstallationen der Sanitäranlage als auch deren Wechselwirkungen untereinander enthalten sind.

8. Sanitäranlagenmanagementverfahren nach einem der Ansprüche 1 bis 7, **dadurch gekennzeichnet, dass** die Sanitäranlagensteuerung nach Erhalt des jeweiligen wenigstens einen Signals (91) durch den wenigstens einen Signalempfänger (10) wenigstens einen Betriebsparameter der wenigstens einen Sanitärinstallation aktiv ändert.

9. Sanitäranlagenmanagementverfahren nach einem der Ansprüche 1 bis 8, **dadurch gekennzeichnet, dass** die Sanitäranlagensteuerung nach Erhalt des jeweiligen wenigstens einen Signals (91) durch den wenigstens einen Signalempfänger (10) wenigstens eine Assistenzmeldung ausgibt.

10. Sanitäranlagenmanagementverfahren nach einem der Ansprüche 1 bis 9, **dadurch gekennzeichnet, dass** das Datenverarbeitungs- und Signalausgabesystem (9) Daten von einer Wasserversorgung und/oder einer Abwasserentsorgung der Sanitäranlage (2) erhält und zur Erzeugung des wenigstens einen Signals (91) mit verarbeitet.

11. Sanitäranlagenmanagementverfahren nach einem der Ansprüche 2 bis 10, **dadurch gekennzeichnet, dass** das Datenverarbeitungs- und Signalausgabesystem (9) von wenigstens einem/einer nicht der Sanitäranlage (2) zugehörigen Zusatzsensor (5) und/oder Steuerung und/oder von wenigstens einer nicht der Sanitäranlage (2) zugehörigen weiteren Datenquelle (7) externe Daten erhält und die externen Daten in die Ableitung der wenigstens einen Regel und/oder des wenigstens einen Algorithmus oder das Erlernen wenigstens eines Nutzungsszenarios einbezieht.

## Claims

1. Sanitary facility management method in which, in a sanitary facility (2) with at least one sanitary installation to which water is supplied and/or through which water flows, and at which at least one operating value (31) of the at least one sanitary installation is recorded in the form of data, the at least one operating value (31) is transmitted to a data processing and signal output system (9) with at least one data transmitter (8) of a sanitary facility control device, wherein said data transmitter (8) is connected to the at least one sanitary installation, the data processing and signal output system (9) processes the at least one operating value (31), generates at least one signal (91) depending thereon and transmits the at least one signal (91) to at least one signal receiver (10) of the sanitary facility control device, wherein the data processing and signal output system (9) learns machine-based and/or generates the at least one signal (91) using an artificial neural network and/or an expert system,
**characterized in that**
the machine-learning of the data processing und signal output system (9) is supervised, wherein the data processing and signal output system (9) is trained with predefined data, and/or is not supervised, wherein the data processing and signal output system (9) learns continuously during operation based on the determined data, and/or is reinforced, wherein the data processing and signal output system (9) receives a reaction or feedback, whether the learning has led to a success, and the data processing and signal output system (9) in a current method run analyzes the transmitted data and the at least one signal (91) generated dependently thereon from the respective method runs preceding the current one, derives at least one rule and/or an algorithm for optimizing the at least one operating value (31) of the at least one sanitary installation therefrom, generates the at least one signal (91) as current signal depending on the currently transmitted data and the at least one rule and/or the at least one algorithm, and transmits this current signal to the at least one signal receiver (10).

2. Sanitary facility management method according to claim 1, **characterized in that** the data processing and signal output system (9) learns on a machine-basis at least one usage scenario for the at least one sanitary installation from data transmitted by the at least one data transmitter (8) and signals transmitted to the at least one signal receiver (10) as well as from the at least one rule and/or the at least one algorithm derived therefrom and optimizes the respective current signal depending on the at least one usage scenario.

3. Sanitary facility management method according to claim 2, **characterized in that** the data processing and signal output system (9) adapts on a machine-basis the at least one usage scenario by taking into account each process run.

4. Sanitary facility management method according to claim 2 or 3, **characterized in that** the data processing and signal output system (9) precalculates on a machine-basis operating values to be expected from the data transmitter in the future based on the at least one usage scenario.

5. Sanitary facility management method according to one of claims 2 to 4, **characterized in that** the data processing and signal output system (9) groups on a machine-basis the data transmitted by the at least one data transmitter (8) into correct and error-indicating data by comparing the transmitted data with the at least one rule and/or the at least one algorithm and/or the at least one usage scenario.

6. Sanitary facility management method according to claim 5, **characterized in that** the data processing and signal output system (9) in the case of error-indicating data (a) initiates an action on the sanitary installation or its water supply and/or (b) issues an assistance message and/or a notification.

7. Sanitary facility management method according to one of claims 2 to 6, **characterized in that** the data processing and signal output system (9) in a sanitary facility (2) which comprises several of the at least one sanitary installation, forms a facility model from the respective rules and/or algorithms and/or usage scenarios, in which both the operating values of all individual sanitary installations of the sanitary facility and their interactions with one another are contained.

8. Sanitary facility management method according to one of claims 1 to 7, **characterized in that** the sanitary facility control actively changes at least one operating parameter of the at least one sanitary installation after receiving the respective at least one signal (91) from the at least one signal receiver (10).

9. Sanitary facility management method according to one of claims 1 to 8, **characterized in that** the sanitary facility control outputs at least one assistance message after receiving the respective at least one signal (91) from the at least one signal receiver (10).

10. Sanitary facility management method according to one of claims 1 to 9, **characterized in that** the data processing and signal output system (9) receives data from a water supply and/or a wastewater disposal of the sanitary facility (2) and processes them to generate the at least one signal (91).

11. Sanitary facility management method according to one of claims 2 to 10, **characterized in that** the data processing and signal output system (9) receives external data from at least one additional sensor (5) and/or control not belonging to the sanitary facility (2) and/or from at least one further data source (7) not belonging to the sanitary facility (2) and includes the external data in the derivation of the at least one rule and/or the at least one algorithm and/or the at least one usage scenario.

## Revendications

1. Procédé de gestion d'installations sanitaires dans lequel, dans une installation sanitaire (2) comportant au moins une installation sanitaire à laquelle de l'eau est amenée et/ou à travers laquelle de l'eau s'écoule, et à laquelle au moins une valeur de fonctionnement (31) de l'au moins une installation sanitaire est enregistrée sous forme de données, l'au moins une valeur de fonctionnement (31) est transmise à un système de traitement de données et d'émission de signaux (9) comportant au moins un émetteur de données (8) d'un dispositif de commande d'installation sanitaire, ledit émetteur de données (8) étant connecté à l'au moins une installation sanitaire, le système de traitement de données et d'émission de signaux (9) traite l'au moins une valeur de fonctionnement (31), génère au moins un signal (91) en fonction de celle-ci et transmet l'au moins un signal (91) à au moins un récepteur de signaux (10) du dispositif de commande d'installation sanitaire, le système de traitement de données et d'émission de signaux (9) apprenant de manière machine et/ou générant l'au moins un signal (91) à l'aide d'un réseau neuronal artificiel et/ou d'un système expert,
**caractérisé en ce que**
l'apprentissage machine du système de traitement de données et d'émission de signaux (9) s'effectue de manière surveillée, le système de traitement de données et d'émission de signaux (9) étant entraîné avec des données prédéfinies, et/ou s'effectue de manière non-surveillée, le système de traitement de données et d'émission de signaux (9) apprenant en continu pendant le fonctionnement sur la base des données déterminées, et/ou s'effectue par renforcement, le système de traitement de données et d'émission de signaux (9) recevant une rétroaction ou un feed-back indiquant si l'apprentissage a abouti à un succès, et le système de traitement de données et d'émission de signaux (9) analyse dans un déroulement de procédé actuel les données transmises et l'au moins un signal (91) généré en fonction de celles-ci à partir des déroulements de procédé respectivement précédents du déroulement actuel, en déduit au moins une règle et/ou un algorithme pour optimiser l'au moins une valeur de fonctionnement (31) de l'au moins une installation sanitaire, génère l'au moins un signal (91) en tant que signal actuel en fonction des données transmises actuellement et de l'au moins une règle et/ou de l'au moins un algorithme, et transmet ce signal actuel à l'au moins un récepteur de signaux (10).

2. Procédé de gestion d'installations sanitaires selon la revendication 1, **caractérisé en ce que** le système de traitement de données et d'émission de signaux (9) apprend de manière machine au moins un scénario d'utilisation pour l'au moins une installation sanitaire à partir de données transmises par au moins un émetteur de données (8) et à partir de signaux transmis à l'au moins un récepteur de signaux (10) ainsi qu'à partir de l'au moins une règle dérivée de ceux-ci et/ou de l'au moins un algorithme et optimise le signal respectivement actuel en fonction de l'au moins un scénario d'utilisation.

3. Procédé de gestion d'installations sanitaires selon la revendication 2, **caractérisé en ce que** le système de traitement de données et d'émission de signaux (9) adapte de manière machine l'au moins un scénario d'utilisation en tenant compte de chaque déroulement de procédé.

4. Procédé de gestion d'installations sanitaires selon la revendication 2 ou 3, **caractérisé en ce que** le système de traitement de données et d'émission de signaux (9) précalcule de manière machine les valeurs de fonctionnement à attendre à l'avenir de l'émetteur de données sur la base de l'au moins un scénario d'utilisation.

5. Procédé de gestion d'installations sanitaires selon l'une des revendications 2 à 4, **caractérisé en ce que** le système de traitement de données et d'émission de signaux (9) compare de manière machine les données transmises par l'au moins un émetteur de données (8) avec l'au moins une règle et/ou l'au moins un algorithme et/ou l'au moins un scénario d'utilisation et les regroupe de manière machine en données correctes et indiquant des erreurs.

6. Procédé de gestion d'installations sanitaires selon la revendication 5, **caractérisé en ce que** le système de traitement de données et d'émission de signaux (9) en cas de données indiquant des erreurs (a) déclenche une action sur l'installation sanitaire ou son alimentation en eau et/ou (b) émet un message d'assistance et/ou une notification.

7. Procédé de gestion d'installation sanitaire selon l'une des revendications 2 à 6, **caractérisé en ce que** le système de traitement de données et d'émission de signaux (9) dans une installation sanitaire (2) qui comporte plusieurs de l'au moins une installation sanitaire, forme un modèle d'installation provenant des règles et/ou des algorithmes et/ou des scénarios d'utilisation respectives qui contient les valeurs de fonctionnement de toutes les installations sanitaires individuelles de l'installation sanitaire ainsi que leurs interactions des unes avec les autres.

8. Procédé de gestion d'installation sanitaire selon l'une des revendications 1 à 7, **caractérisé en ce que** la commande d'installation sanitaire modifie activement au moins un paramètre de fonctionnement de l'au moins une installation sanitaire après avoir reçu l'au moins un signal (91) respectif provenant de l'au moins un récepteur de signal (10).

9. Procédé de gestion d'installation sanitaire selon l'une des revendications 1 à 8, **caractérisé en ce que** la commande d'installation sanitaire émet au moins un message d'assistance après avoir reçu l'au moins un signal (91) respectif provenant de l'au moins un récepteur de signal (10).

10. Procédé de gestion d'installation sanitaire selon l'une des revendications 1 à 9, **caractérisé en ce que** le système de traitement de données et d'émission de signaux (9) reçoit des données provenant d'une alimentation en eau et/ou d'une évacuation des eaux usées de l'installation sanitaire (2) et les traite pour générer l'au moins un signal (91).

11. Procédé de gestion d'installation sanitaire selon l'une des revendications 2 à 10, **caractérisé en ce que** le système de traitement de données et d'émission de signaux (9) reçoit des données externes d'au moins un capteur (5) supplémentaire et/ou d'une commande n'appartenant pas à l'installation sanitaire (2) et/ou d'au moins une autre source de données (7) n'appartenant pas à l'installation sanitaire (2) et inclut les données externes dans l'élaboration de l'au moins une règle et/ou de l'au moins un algorithme et/ou dans l'apprentissage de l'au moins un scénario d'utilisation.
